Europäisches Patentamt

European Patent Office

Office européen des brevets

(19)

(11) **EP 1 084 338 B1**

(12) **FASCICULE DE BREVET EUROPEEN**

(45) Date de publication et mention
de la délivrance du brevet:
**25.02.2004 Bulletin 2004/09**

(21) Numéro de dépôt: **00911022.2**

(22) Date de dépôt: **21.03.2000**

(51) Int Cl.⁷: **F02D 41/02**, F02D 41/40

(86) Numéro de dépôt international:
**PCT/FR2000/000709**

(87) Numéro de publication internationale:
**WO 2000/057045 (28.09.2000 Gazette 2000/39)**

(54) **MOTEUR A ESSENCE A QUATRE TEMPS A ALLUMAGE COMMANDE, A INJECTION DIRECTE DE CARBURANT**

FREMDGEZÜNDETE VIERTAKT-BRENNKRAFTMASCHINE MIT DIREKTEINSPRITZUNG

FOUR-STROKE GAS ENGINE WITH SPARK IGNITION, WITH DIRECT FUEL INJECTION

(84) Etats contractants désignés:
**AT BE CH CY DE DK ES FI FR GB GR IE IT LI LU MC NL PT SE**

(30) Priorité: **23.03.1999 FR 9903614**

(43) Date de publication de la demande:
**21.03.2001 Bulletin 2001/12**

(73) Titulaire: **Peugeot Citroen Automobiles SA
92200 Neuilly sur Seine (FR)**

(72) Inventeur: **LAGIER, Marc
F-95100 Argenteuil (FR)**

(74) Mandataire: **Jacobson, Claude et al
Cabinet Lavoix
2, Place d'Estienne d'Orves
75441 Paris Cedex 09 (FR)**

(56) Documents cités:
EP-A- 0 135 176      EP-A- 0 337 366
EP-A- 0 826 869      EP-A- 0 856 655
US-A- 5 482 017

## EP 1 084 338 B1

**Description**

La présente invention concerne les moteurs à combustion interne et se rapporte plus particulièrement à un moteur à quatre temps, à essence, à allumage commandé, dans lequel le carburant est directement injecté dans la chambre de combustion par l'intermédiaire d'un système d'alimentation à carburant à haute pression;

L'admission d'air est régulée par un boîtier à papillon motorisé;

Les paramètres de commande sont calculés et appliqués par l'unité centrale de contrôle; et

Les gaz d'échappement sont traités par un ou plusieurs catalyseurs placés dans la ligne d'échappement.

Un moteur à essence à quatre temps à allumage commandé auquel s'applique l'invention est équipé d'un système d'alimentation en carburant à haute pression.

Ce système est constitué des principaux éléments suivants :

- un module à basse pression comprenant une pompe électrique et un régulateur de pression mécanique. Le régulateur de pression permet par pilotage d'un débit de retour au réservoir d'assurer une pression compatible avec les besoins de l'étage à haute pression;
- une pompe à haute pression de type mécanique placée sur la culasse du moteur est entraînée par l'arbre à cames d'admission;
- un module d'injection comprenant une rampe d'injection, un régulateur électromagnétique de pression, un capteur de pression et quatre injecteurs.

Le capteur et le régulateur de pression sont gérés par un calculateur de contrôle du moteur. Ils permettent à ce calculateur de maintenir dans la rampe une pression de carburant égale à une consigne étalonnable.

Cette consigne peut être modulée suivant le point de fonctionnement et le mode de combustion du moteur.

Les quatre injecteurs sont électriquement commandés par le calculateur de contrôle du moteur. Le pilotage de leur ouverture permet à ce calculateur de maîtriser la quantité de carburant injectée dans le moteur.

La principale caractéristique du système d'alimentation à haute pression permet l'introduction du carburant directement dans la chambre de combustion.

Cette quantité de carburant est définie par les deux caractéristiques: durée et phasage.

La durée d'injection ou temps d'injection est le temps pendant lequel l'injecteur est commandé ouvert par le calculateur de contrôle du moteur.

Elle est ajustée par le contrôle du moteur en fonction :

- de la volonté du conducteur mesurée par l'intermédiaire d'un capteur de position de la pédale d'accélérateur;
- des contraintes imposées par le post-traitement des gaz d'échappement afin de satisfaire les normes de dépollution en vigueur;
- des besoins propres du moteur.

Le phasage de l'injection est l'intervalle angulaire rapporté à la rotation du vilebrequin, séparant le début de l'injection et le point mort haut d'allumage du cylindre concerné par l'injection.

Le phasage de l'injection est ajusté en fonction :

- de la quantité de carburant à injecter,
- du mode de combustion garantissant le meilleur compromis, consommation/dépollution/agrément de conduite.

On distingue principalement deux types de phasage d'injection :

- injection durant la phase d'admission,
- injection durant la phase de compression.

On injecte durant la phase d'admission pour un fonctionnement en mode homogène et durant la phase de compression pour un fonctionnement en mode stratifié. Ce dernier mode est le mode de fonctionnement privilégié.

En effet, en mode homogène la consommation de carburant est plus importante. On n'utilise donc ce mode que dans certaines périodes de fonctionnement du moteur nécessitant un mélange plus riche.

Le moteur à essence à quatre temps à allumage commandé pour lequel s'applique l'invention est également équipé d'un système de post traitement des gaz de combustion dans la ligne d'échappement.

Ce système est constitué d'au moins un catalyseur placé au plus près des soupapes d'échappement du moteur afin d'assurer une température suffisamment élevée pour garantir une bonne efficacité de conversion des polluants.

Cette implantation du catalyseur à proximité des soupapes d'échappement du moteur n'est pas suffisante pour garantir un niveau global d'émission satisfaisant lors de la phase de mise action.
En effet, durant cette phase, deux effets négatifs se combinent :

- les émissions brutes du moteur sont importantes du fait d'une qualité de combustion dégradée par la température trop faible de la chambre de combustion;
- le traitement des polluants effectué par le catalyseur n'a qu'une très faible efficacité, car la température de l'élément catalyseur est inférieure à la température nécessaire à l'amorçage des réactions chimiques de traitement des polluants.

Afin d'éviter l'émission à l'atmosphère d'une quantité importante de polluants, il est nécessaire d'assurer pendant la phase de mise en action du moteur, un mode de fonctionnement assurant un bon compromis entre les émissions de polluants qui doivent être les plus faibles possibles et la montée en température du moteur et du système d'échappement qui doit être la plus rapide possible.

L'invention vise à remédier aux inconvénients des systèmes d'injection connus en créant un système permettant de réaliser les compromis énoncés ci-dessus.

Elle a donc pour objet un moteur à essence à quatre temps à allumage commandé équipé d'un système d'alimentation de carburant à haute pression permettant l'injection du carburant directement dans la chambre de combustion de chaque cylindre du moteur, d'un boîtier de commande du papillon de gaz motorisé assurant le dosage de la quantité d'air admise par le moteur, d'un catalyseur placé dans la ligne d'échappement au débouché du collecteur des gaz d'échappement, d'une sonde de température placée dans la ligne d'échappement en aval du catalyseur et d'un calculateur de contrôle recevant les informations relatives au régime de rotation du moteur, à la position de la pédale d'accélérateur, à la charge en air du moteur, aux températures du moteur et des gaz d'échappement en sortie du catalyseur, caractérisé en ce que lorsque les conditions thermiques de la ligne d'échappement sont insuffisantes pour assurer un traitement efficace de polluants émis par le moteur, le calculateur de contrôle commande pour chaque cylindre, l'injection de la quantité globale de carburant nécessaire en deux temps, le premier pendant la phase d'admission et le second, durant la phase de compression et en ce qu'il est prévu un algorithme intégré dans le calculateur de contrôle et permettant de calculer à partir d'un modèle de combustion du moteur, en double injection, le débit de carburant à injecter durant l'admission en tenant compte du débit déjà programmé pour la phase de compression, du rapport air/combustible de consigne, et du rendement de combustion imposé par l'avance à l'allumage du moteur.

Suivant des caractéristiques particulières, il est prévu :

- un algorithme intégré dans le calculateur de contrôle et permettant de calculer à partir d'un modèle de combustion du moteur, en double injection, le débit de carburant à injecter durant la compression, en tenant compte du débit à injecter durant l'admission, du rapport air/combustible de consigne et du rendement de combustion imposé par l'avance à l'allumage;
- un algorithme intégré dans le calculateur de contrôle et permettant de calculer à partir d'un modèle de l'influence de l'avance sur le couple moteur, l'avance à appliquer pour obtenir un rendement de combustion de consigne;
- un algorithme intégré dans le calculateur de contrôle et permettant de calculer la consigne de remplissage en air du moteur à partir de quantités globales de carburant et la consigne de rapport air/combustible;
- cette consigne de remplissage est ensuite transformée en commande du moteur pilotant un actionneur du boîtier de commande de la position du papillon des gaz, motorisé assurant l'admission de l'air dans le moteur.

L'invention sera mieux comprise à l'aide de la description qui va suivre, donnée uniquement à titre d'exemple et faite en se référant aux dessins annexés, sur lesquels :

- la Fig.1 est un schéma synoptique de l'agencement d'un moteur à quatre temps à allumage commandé auquel s'applique la présente invention;
- la Fig.2 est un tableau représentant le mode d'injection en phase d'admission;
- la Fig.3 est un tableau représentant l'injection en phase de compression;
- la Fig.4 est un organigramme représentant l'algorithme général de gestion de la double injection suivant l'invention; et
- les Figs 5a à 5c représentent les tableaux de la gestion de l'injection sur enclenchement/déclenchement de la double injection.

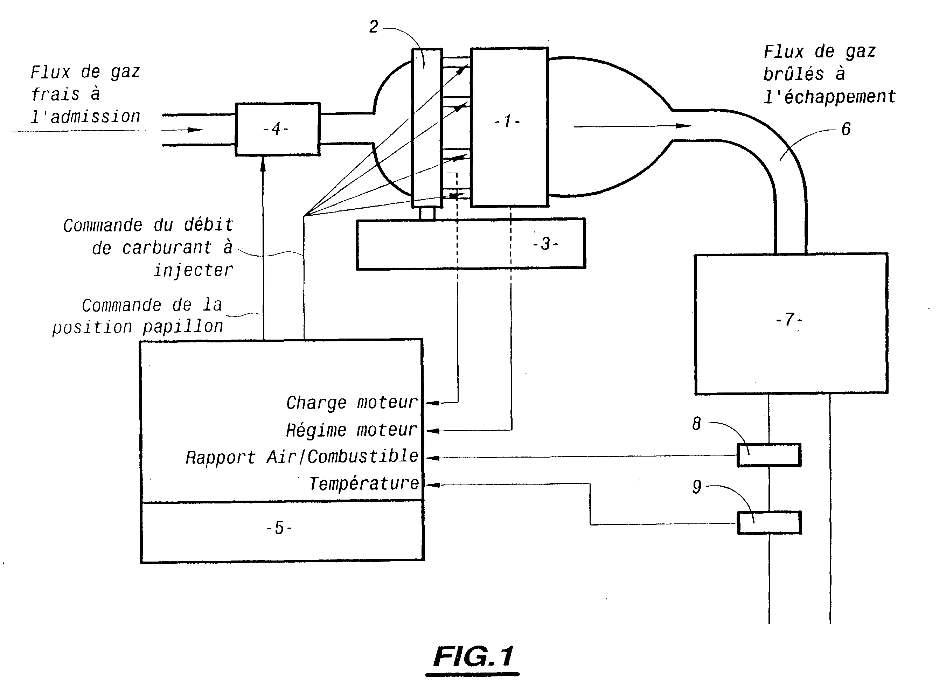

Sur le schéma de la figure 1, on a représenté un moteur à quatre temps à combustion interne1 auquel est associé un système d'injection directe 2 assurant l'injection dans les quatre cylindres du moteur.

Le système d'injection directe 2 est commandé par un système d'alimentation en carburant à haute pression 3 et le flux de gaz frais d'admission est assuré par un boîtier 4 motorisé de commande du papillon des gaz relié au système d'injection directe 2.

Le système d'alimentation en carburant à haute pression 3 et le boîtier de commande du papillon des gaz 4 sont tous deux commandés par une unité centrale de contrôle 5 qui assure la commande du débit de carburant à injecter en fonction de la charge du moteur, du régime du moteur, du rapport air combustible dans la ligne d'échappement ainsi que de la température dans cette ligne d'échappement.

L'unité centrale de contrôle commande par ailleurs la position du papillon dans le boîtier 4.

Le moteur 1 comporte une ligne d'échappement 6 dans laquelle est inséré un système 7 de traitement catalytique des gaz d'échappement. En aval du système de traitement 7, la ligne 6 comporte un capteur 8 du rapport air combustible et un capteur 9 de température.

Les conditions d'application de la double injection pour mise en action suivant l'invention sont les suivantes.

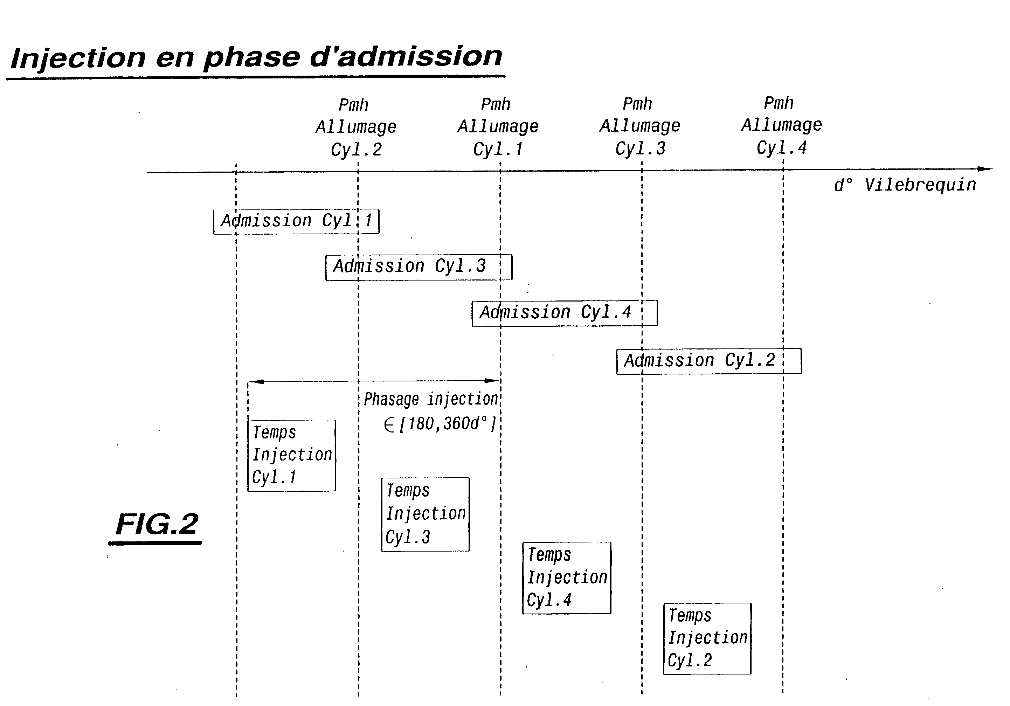

Le démarrage du moteur est effectué dans un mode classique sans double injection conformément au tableau de la Fig.2. Cela permet de dissocier les besoins propres du moteur en phase de démarrage vis à vis des contraintes d'émission imposées à l'ensemble moteur + ligne d'échappement.

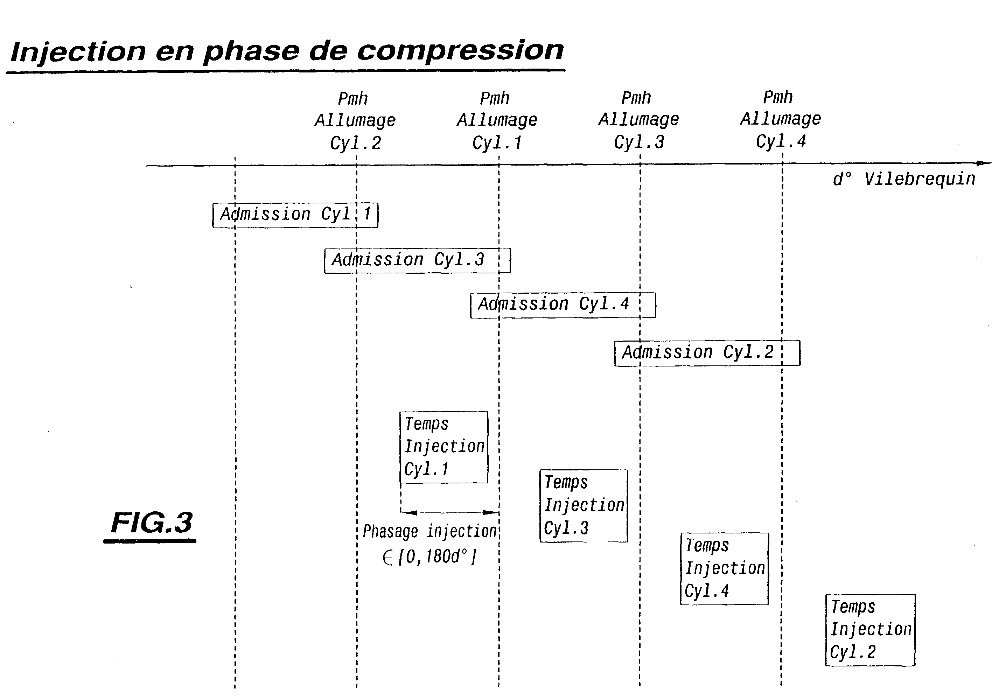

Une fois le démarrage du moteur effectué, le calculateur de contrôle 5 scrute les conditions thermiques de l'ensemble moteur 1 + ligne d'échappement 6. Si ces conditions nécessitent une augmentation rapide des températures de l'ensemble, le processus de double injection est enclenché conformément au tableau de la Fig.3.

A chaque demi-tour du moteur, l'unité centrale de contrôle 5 teste les conditions de maintien de la double injection.

Lorsque ces conditions mettent en évidence une efficacité suffisante du ou des catalyseurs de la ligne d'échappement, la double injection est arrêtée.

Le mode de combustion du moteur est alors choisi par l'unité centrale de contrôle en fonction des différentes sollicitations du système.

Une fois stoppé, le processus de double injection pour mise en action ne peut être relancé avant le démarrage suivant.

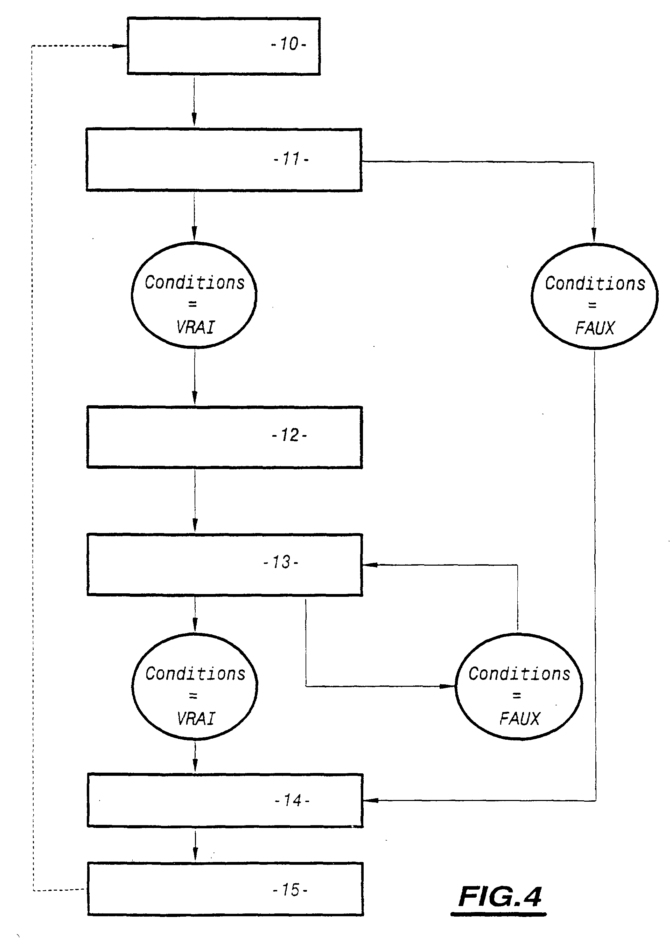

L'algorithme général de la gestion de la double injection est illustré dans l'organigramme de la figure 4.

L'étape 10 correspond au démarrage du moteur terminé. Au cours de l'étape 11, on teste les conditions d'enclenchement de la double injection.

Si ces conditions sont réunies, on applique la double injection à l'étape 12. Puis à l'étape 13, on teste les conditions de déclenchement de la double injection.

Si ces conditions sont satisfaites, on arrête la double injection à l'étape 14.

Par ailleurs, si au cours du test, des conditions d'enclenchement de la double injection réalisé à l'étape 11, il s'avère que les conditions ne sont pas réunies, on passe directement à l'étape 14 pour arrêter la double injection.

Au cours de la phase 15, on se met en attente du redémarrage suivant pour se retrouver à l'étape 10, en vue d'engager une nouvelle phase d'enclenchement de la double injection.

La gestion de l'injection est assurée comme suit.

On va donner ci-après une définition du phasage des deux modes d'injection.

La première partie du carburant est injectée durant la phase d'admission. Le phasage de cette première injection est spécifique au mode "double injection" et peut ainsi être ajusté pour synchroniser précisément l'injection et la course descendante du piston

La seconde partie de carburant est injectée durant la phase de compression.

Le phasage de cette seconde injection est également spécifique du mode "double injection" et peut ainsi être ajusté pour synchroniser précisément l'injection et la course ascendante du piston.

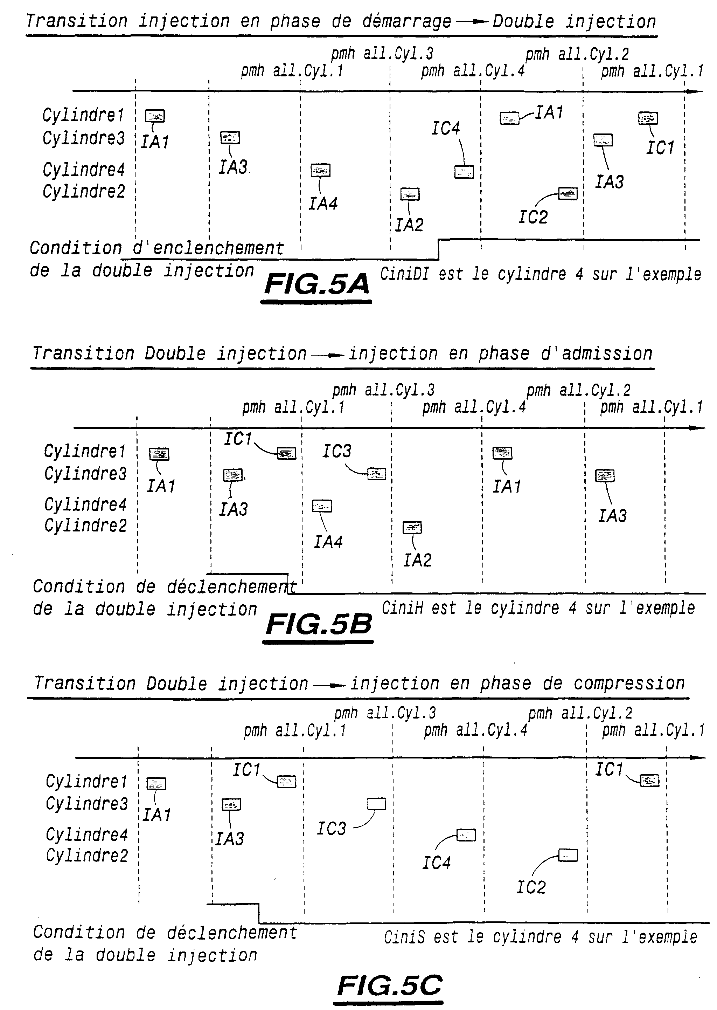

Sur la figure 5a est représentée la coordination des injections à l'enclenchement de la double injection.

On voit sur cette figure que les quatre cylindres reçoivent d'abord du combustible au cours de leurs phases d'admission respectives. Ces premières injections sont représentées par les rectangles de gauche $IA_1$ à $IA_4$ de chaque zone matérialisant l'intervalle de temps au cours duquel ont lieu l'admission et la compression pour chaque cylindre.

Puis, lors de l'enclenchement de la double injection déterminée par le graphique "condition d'enclenchement de la double injection", les injections complémentaires assurées au cours des phases de compression sont représentées par les rectangles IC4, IC2, IC1, disposés en fin de phase de compression des cylindres correspondants.

Durant la phase d'après démarrage, le moteur est piloté selon un mode d'injection spécifique.

Lorsque le passage en mode double injection est décidé, l'unité de contrôle du moteur 5 identifie le premier cylindre noté CiniDI sur lequel l'injection dans la phase de compression peut être ajoutée à l'injection déjà envoyée durant la phase d'admission.

Les cylindres suivants CiniDI dans l'ordre d'allumage sont ensuite alimentés en mode de double injection.

Sur la figure 5b, sur laquelle les mêmes notations ont été utilisées que sur la figure 5a, on a représenté la coordination des injections au déclenchement pour passer en injection unique dans la phase d'admission. Lorsque l'arrêt de la double injection est décidé pour passer en injection simple, dans la phase d'admission, l'unité de contrôle du moteur 5 identifie le premier cylindre noté CiniH sur lequel les deux injections n'ont pas encore été programmées.

Les cylindres suivants CiniH dans l'ordre d'allumage sont ensuite alimentés par une injection unique en phase d'admission.

Sur la figure 5c, on a représenté la coordination des injections au déclenchement pour passer en injection unique dans la phase de compression.

Lorsque l'arrêt de la double injection est décidé pour passer en injection unique dans la phase de compression, l'unité centrale 5 de contrôle du moteur identifie le premier cylindre noté CiniS sur lequel les deux injections n'ont pas encore été programmées.

Les cylindres suivants CiniS dans l'ordre d'allumage sont ensuite alimentés par une injection unique en phase de compression.

On va maintenant donner la définition de la durée des deux injections.

Deux configurations peuvent être envisagées.

**Configuration 1 :**

Injection en phase d'admission

La quantité de carburant injectée est une donnée paramétrable durant la mise au point du moteur. Elle peut être définie en fonction du couple demandé par le conducteur, du régime de rotation du moteur et de la température de l'eau.

Injection en phase de compression

La quantité injectée est calculée à partir du couple demandé par le conducteur et doit tenir compte de la première injection déjà réalisée. La prise en compte du couple développé par la première injection est réalisée par un modèle de combustion du moteur en double injection.

Dans ce modèle, on utilise les notations suivantes :

CMI = couple moyen indiqué positif développé par le moteur durant la phase de détente.
Avance opti = avance à l'allumage développant le CMI maximum.
CMI = (CMIH opti + CMIS opti) x $\eta$ avance

avec :

CMIH opti = couple développé à avance optimum de stratifié par quantité de carburant injectée en phase d'admission;
CMIS opti = couple développé à avance optimum par la quantité de carburant injectée durant la compression;
$\eta$ avance = rendement d'avance de double injection
   = CMI à avance appliquée/ CMI à avance opti.
CMIH opti = Qessence H x K1 x K2

avec :

Qessence H = quantité de carburant injectée durant l'admission
K1 = rendement de combustion théorique
K2 = coefficient pondérateur de K1 permettant d'assurer K1 x K2 = rendement de combustion réel identifié par le moteur en double injection.
CMIS opti = F (Qessence S, Régime) $\Rightarrow$ Qessence S = $F^{-1}$ (CMIS opti, Régime).

Les fonctions F et $F^{-1}$ sont identifiées au banc d'essai du moteur, sans double injection, à avance à l'allumage opti.

A partir du couple de consigne et du besoin en (Qessence phase admission, rendement d'avance) pour la mise en action, l'unité de contrôle du moteur 5 calcule la quantité d'essence de consigne pour l'injection en phase de compression par :

Qessence S = $F^{-1}$ (CMI/$\eta$avance - QessenceH x K1 x K2; régime).

Ce modèle estime le couple en fonction :

- des deux quantités de carburant injectées,
- du rapport air/combustible du mélange utilisé,
- du rendement d'avance appliqué.

L'inversion de ce modèle permet, à partir du couple demandé, de la quantité d'essence déjà injectée durant l'admission et d'un rapport A/F de consigne, de recalculer à chaque demi-tour du moteur, la consigne du carburant à injecter durant la phase de compression.

Le modèle de combustion en double injection est identifié lors d'une campagne spécifique d'essais au banc.

**Configuration 2:**

Injection en phase de compression :

La quantité injectée est une donnée paramétrable durant la mise au point du moteur. Elle peut être définie en fonction du couple demandé par le conducteur, du régime de rotation du moteur et de la température de l'eau.

Injection en phase d'admission :

La quantité injectée est caiculée à partir du couple demandé par le conducteur et doit tenir compte de l'injection déjà paramétrée pour la phase de compression. La prise en compte du couple développé par cette injection est réalisée par le modèle de combustion du moteur en double injection déjà mentionné.

L'inversion de ce modèle permet, à partir du couple demandé, de la quantité d'essence paramétrée pour la phase de compression et d'un rapport A/F de consigne, de recalculer à chaque demi-tour du moteur, la consigne de carburant à injecter durant la phase d'admission.

Gestion de la quantité d'air admise (régulation de la richesse par action sur la quantité d'air admise).

La quantité d'air admise dans le moteur est maîtrisée par l'unité centrale de contrôle du moteur à l'aide du papillon des gaz motorisé 4 (Fig.1).

En mode double injection, la quantité d'air admise de consigne est la somme de deux termes.

$$\text{Qair Consigne} = \text{Qair base} + \text{DQ air régulation}$$

Qair base est calculée à partir de la quantité globale de carburant et d'un rapport air/combustible de consigne.

$$\text{Qair base} = (\text{Qessence homogène} + \text{Qessence strafifé}) \times (\text{A/F})_{\text{consigne}}$$

La consigne du rapport A/F air/combustible est cartographiée en fonction du point (Régime, Charge).

DQ air régulation est calculée à partir de l'estimation de la quantité d'air mesurée par l'unité centrale de contrôle 5 du moteur et de Qair base.

La comparaison de la quantité d'air de consigne et de la quantité d'air mesurée permet une compensation en boucle fermée garantissant l'égalité entre les deux termes.

Gestion de la consigne d'air sur enclenchement/déclenchement de la double injection:

L'application et la suppression de la consigne de débit d'air en double injection se fait sans aucun filtrage de la position du papillon correspondante.

Gestion de l'avance à l'allumage

Selon les caractéristiques du moteur, l'avance à l'allumage de base pourra être l'avance privilégiant un des deux modes de combustion associés à une injection en phase d'admission ou de compression.

Cette avance à l'allumage est diminuée d'un terme correctif spécifique à la double injection :

Avance = Avance de base + Davance double injection

Davance double injection est paramétrée sous la forme d'un retrait de rendement d'avance. La traduction du retrait de rendement en retrait d'avance est effectuée par l'intermédiaire d'un modèle physique de l'influence de l'avance à l'allumage sur le couple moteur indiqué en double injection.

Les notations utilisées sont les suivantes:

Davance = Avance opti - Avance courante

Rendement d'avance = CMI avance courante / CMI avance opti stratifié.

L'influence d'un retrait d'avance sur le CMI est fonction du mode de combustion et du point de fonctionnement du moteur.

La modélisation physique de cette influence permet d'assurer une bonne maîtrise du couple moteur indépendamment de l'ampleur du retrait d'avance.

La modélisation de cette fonction est de la forme :

CMI à avance courante / CMI à avance opti = F(Davance)

Elle est identifiée au banc en moyennant les courbes mesurées sur les différents points de fonctionnement de la double injection.

Une fois la courbe F identifiée, la courbe $F^{-1}$ peut être utilisée pour traduire le retrait de rendement calculé en retrait d'avance.

Gestion des transitions d'avance sur enclenchement et déclenchement de la double injection.

L'application et la disparition du retrait de rendement d'avance se font par l'intermédiaire d'un filtre passe-bas du premier ordre dont la constante de temps est paramétrable.

La constante de temps est différente entre l'application et la disparition du retrait de rendement d'avance.

Influence de la double injection pour la mise en action sur la régulation du régime de ralenti.

Le régime de consigne du moteur au ralenti est calculé comme suit :

Nconsigne = Nbase + DN DI

Nbase est la consigne de régime de base fonction de la température de l'eau du moteur.

DN DI est un terme paramétrable appliqué lorsque la double injection est enclenchée.

Ce terme est également fonction de la température de l'eau du moteur.

Si un consommateur de couple important est enclenché pendant la double injection, son besoin en régime de ralenti, si il est plus important que Nconsigne calculé précédemment, est respecté.

Afin d'éviter un désagrément pour l'utilisateur, l'application et la disparition de la consigne de ralenti augmentée se font selon des rampes calibrables.

Ces rampes sont différentes entre l'application et la disparition de la consigne de ralenti augmentée.

**Revendications**

**1.** Moteur à essence à quatre temps à allumage commandé équipé d'un système (3) d'alimentation de carburant à haute pression permettant l'injection du carburant directement dans la chambre de combustion de chaque cylindre du moteur, d'un boîtier (4) de commande du papillon de gaz motorisé assurant le dosage de la quantité d'air admise par le moteur (1), d'un catalyseur (7) placé dans la ligne d'échappement (6) au débouché du collecteur des gaz d'échappement, d'une sonde de température (9) placée dans la ligne d'échappement (6) en aval du catalyseur et d'un calculateur (5) de contrôle recevant les informations relatives au régime de rotation du moteur, à la position de la pédale d'accélérateur, à la charge en air du moteur, aux températures du moteur et des gaz d'échappement en sortie du catalyseur, **caractérisé en ce que** lorsque les conditions thermiques de la ligne d'échappement (6) sont insuffisantes pour assurer un traitement efficace de polluants émis par le moteur, le calculateur de contrôle (5) commande pour chaque cylindre, l'injection de la quantité globale de carburant nécessaire en deux temps, le premier pendant la phase d'admission et le second, durant la phase de compression et **en ce qu'**il est prévu un algorithme intégré dans le calculateur de contrôle et permettant de calculer à partir d'un modèle de combustion du moteur, en double injection, le débit de carburant à injecter durant l'admission en tenant compte du débit déjà programmé pour la phase de compression, du rapport air/combustible de consigne, et du rendement de combustion imposé par l'avance à l'allumage du moteur.

2. Moteur suivant la revendication 1, **caractérisé en ce qu'**il est prévu un algorithme intégré dans le calculateur de contrôle et permettant de calculer à partir d'un modèle de combustion du moteur, en double injection, le débit de carburant à injecter durant la compression, en tenant compte du débit à injecter durant l'admission, du rapport air/combustible de consigne et du rendement de combustion imposé par l'avance à l'allumage.

3. Moteur suivant l'une des revendications 1 et 2, **caractérisé en ce qu'**il est prévu un algorithme intégré dans le calculateur de contrôle et permettant de calculer à partir d'un modèle de l'influence de l'avance sur le couple moteur. l'avance à appliquer pour obtenir un rendement de combustible et de consigne.

4. Moteur suivant l'une des revendications 1 à 3, **caractérisé en ce qu'**il est prévu un algorithme intégré dans le calculateur de contrôle et permettant de calculer la consigne de remplissage en air du moteur à partir de quantités globales de carburant et la consigne de rapport air/combustible.

5. Moteur suivant la revendication 4, **caractérisé en ce que** cette consigne de remplissage est ensuite transformée en commande du moteur pilotant un actionneur du boîtier de commande de la position du papillon des gaz, motorisé assurant l'admission de l'air dans le moteur.


**Patentansprüche**

1. Viertakt-Benzinbrennkraftmaschine mit einer Einrichtung (3) zur Versorgung mit Kraftstoff unter einem hohen Druck, die ein direktes Einspritzen des Kraftstoffes in die Verbrennungskammer jedes Zylinders der Brennkraftmaschine erlaubt, einem Steuerkasten (4) für ein von einem Motor angetriebenes Gasventil, das für die Dosierung der der Brennkraftmaschine (1) zugeführten Luftmenge sorgt, einem Katalysator (7), der in der Abgasleitung (6) am Ausgang des Abgassammeltopfes angeordnet ist, einer Temperatursonde (9) , die sich in der Abgasleitung (6) stromabwärts vom Katalysator befindet, und einem Steuerrechner (5), der Informationen bezüglich des Drehzahlbereiches des Motors, der Position des Fahrpedals, der Luftversorgung der Brennkraftmaschine und der Temperaturen der Brennkraftmaschine und des Abgases am Ausgang des Katalysators empfängt,
   **dadurch gekennzeichnet,**
   **dass** dann, wenn die thermischen Verhältnisse der Abgasleitung (6) nicht ausreichen, um eine wirksame Verarbeitung der von der Brennkraftmaschine ausgegebenen Schadstoffe sicherzustellen, der Steuerrechner (5) für jeden Zylinder die globale Einspritzmenge an benötigtem Kraftstoff in zwei Takten, nämlich einem ersten während der Füllungsphase und einem zweiten während der Kompressionsphase, steuert und
   **dass** ein im Steuerrechner integrierter Algorithmus vorgesehen ist, der ausgehend von einem Modell der Verbrennung der Brennkraftmaschine bei doppelter Einspritzung die Berechnung der Kraftstoffmenge, die während der Füllung einzuspritzen ist, unter Berücksichtigung der bereits für die Kompressionsphase programmierten Menge, des vorgeschriebenen Luft/Kraftstoffverhältnisses und dem Wirkungsgrad der Verbrennung erlaubt, der durch die Zündvorstellung der Brennkraftmaschine gegeben ist.

2. Brennkraftmaschine nach Anspruch 1,
   **dadurch gekennzeichnet,**
   **dass** ein im Steuerrechner integrierter Algorithmus vorgesehen ist, der es erlaubt, ausgehend von einem Modell der Verbrennung der Brennkraftmaschine bei doppelter Einspritzung die Menge an Kraftstoff, die während der Kompression einzuspritzen ist, unter Berücksichtigung der während der Füllung einzuspritzenden Menge, des vorgeschriebenen Luft /Kraftstoffverhältnisses und dem Wirkungsgrad der Verbrennung zu berechnen, der durch die Zündvorstellung gegeben ist.

3. Brennkraftmaschine nach einem der Ansprüche 1 und 2,
   **dadurch gekennzeichnet,**
   **dass** ein im Steuerrechner integrierter Algorithmus vorgesehen ist, der es erlaubt, ausgehend-von einem Modell des Einflusses der Zündvorstellung auf das Drehmoment der Brennkraft-. maschine die Zündvorstellung zu berechnen, die anzuwenden ist, um den vorgeschriebenen Kraftstoffwirkungsgrad zu erzielen.

4. Brennkraftmaschine nach einem der Ansprüche 1 bis 3,
   **dadurch gekennzeichnet,**

**dass** ein im Steuerrechner integrierter Algorithmus vorgesehen ist, der es erlaubt, die vorgeschriebene Füllung der Brennkraftmaschine mit Luft ausgehend von den globalen Kraftstoffmengen und dem vorgeschriebenen Luft/Kraftstoffverhältnis zu berechnen.

**5.** Brennkraftmaschine nach Anspruch 4,
**dadurch gekennzeichnet,**
**dass** die vorgeschriebene Füllung dann in einen Befehl für die Brennkraftmaschine umgewandelt wird, der ein Stellglied des Steuergehäuses für die Position des motorbetriebenen Gasventils so ansteuert, dass die Füllung der Brennkraftmaschine mit Luft sichergestellt ist.

**Claims**

**1.** A four-stroke petrol engine with controlled ignition fitted with a high pressure fuel feed system (3) enabling the fuel to be injected directly into the combustion chamber of each cylinder of the engine, with a powered throttle valve control box (4) determining the amount of air intake into the engine (I), with a catalyst (7) situated in the exhaust line (6) at the outlet of the exhaust gas manifold, with a temperature sensor (9) situated in the exhaust line (6) downstream of the catalyst, and with a control computer (5) receiving the data concerning the rotational speed of the engine, the position of the accelerator pedal, the engine air load, the temperature levels of the engine and of the exhaust gases at the catalyst outlet, **characterised in that**, when the heat conditions of the exhaust line (6) are insufficient to ensure that the pollutants emitted by the engine are efficiently treated, for each cylinder the control computer (5) controls the injection of the total amount of fuel required in two stages, the first during the intake phase and the second during the compression phase, and **in that** there is provided an algorithm which is integrated into the control computer and which, on the basis of a combustion model of the twin-injection engine, makes it possible to calculate the fuel flow to be injected during the intake phase, account being taken of the flow already programmed for the compression phase, the desired air/fuel ratio, and the combustion efficiency necessitated by the engine ignition advance.

**2.** An engine according to claim 1, **characterised in that** there is provided an algorithm which is integrated into the control computer and which, on the basis of a combustion model of the twin-injection engine, makes it possible to calculate the fuel flow to be injected during the compression phase, account being taken of the flow to be injected during the intake phase, the desired air/fuel ratio and the combustion efficiency necessitated by the engine ignition advance.

**3.** An engine according to one of claims 1 and 2, **characterised in that** there is provided an algorithm which is integrated into the control computer and which, on the basis of a model of the effect of the advance on the engine torque, makes it possible to calculate the advance to be applied to obtain a desired combustion efficiency.

**4.** An engine according to any one of claims 1 to 3, **characterised in that** there is provided an algorithm which is integrated into the control computer and which makes it possible to calculate the desired air fill value of the engine from total fuel quantities and the desired air/fuel ratio.

**5.** An engine according to claim 4, **characterised in that** this desired fill value is then converted into an engine command controlling an actuator of the powered throttle valve position control box maintaining the intake of air into the engine.

**FIG.1**

EP 1 084 338 B1

# Injection en phase d'admission

FIG.2

Pmh Allumage Cyl.2     Pmh Allumage Cyl.1     Pmh Allumage Cyl.3     Pmh Allumage Cyl.4

d° Vilebrequin

Admission Cyl.1

Admission Cyl.3

Admission Cyl.4

Admission Cyl.2

Phasage injection $\in [180, 360d°]$

Temps Injection Cyl.1

Temps Injection Cyl.3

Temps Injection Cyl.4

Temps Injection Cyl.2

EP 1 084 338 B1

# Injection en phase de compression

**FIG.3**

Pmh Allumage Cyl.2  
Pmh Allumage Cyl.1  
Pmh Allumage Cyl.3  
Pmh Allumage Cyl.4

d° Vilebrequin

Admission Cyl.1

Admission Cyl.3

Admission Cyl.4

Admission Cyl.2

Temps Injection Cyl.1

Phasage injection $\in [0, 180d°]$

Temps Injection Cyl.3

Temps Injection Cyl.4

Temps Injection Cyl.2

EP 1 084 338 B1

*FIG.4*

## Transition injection en phase de démarrage → Double injection

pmh all.Cyl.3          pmh all.Cyl.2

pmh all.Cyl.1        pmh all.Cyl.4      pmh all.Cyl.1

Cylindre1   IA1

Cylindre3   IA3

Cylindre4   IA4

Cylindre2   IA2

IC4   IA1   IC1   IA3   IC2

Condition d'enclenchement
de la double injection

**FIG.5A**    CiniDI est le cylindre 4 sur l'exemple

## Transition Double injection → injection en phase d'admission

pmh all.Cyl.3          pmh all.Cyl.2

pmh all.Cyl.1        pmh all.Cyl.4      pmh all.Cyl.1

Cylindre1   IA1

Cylindre3   IA3

Cylindre4   IA4

Cylindre2   IA2

IC1   IC3   IA1   IA3

Condition de déclenchement
de la double injection

**FIG.5B**    CiniH est le cylindre 4 sur l'exemple

## Transition Double injection → injection en phase de compression

pmh all.Cyl.3          pmh all.Cyl.2

pmh all.Cyl.1        pmh all.Cyl.4      pmh all.Cyl.1

Cylindre1   IA1

Cylindre3   IA3

Cylindre4

Cylindre2

IC1   IC3   IC4   IC2   IC1

Condition de déclenchement
de la double injection

CiniS est le cylindre 4 sur l'exemple

**FIG.5C**